# EUROPEAN PATENT APPLICATION

(11) **EP 4 825 999 A1**
(43) Date of publication of application: **21.10.2026**
(21) Application number: 26171972.8
(22) Date of filing: 13.04.2026
(51) Int. Cl.: C22B 9/20, C21B 13/00, C21B 13/12, C22B 7/00

(54) **METHOD OF REDUCTION OF THE SCALE FROM FORGING**

(30) Priority: 17.04.2025 IT 202500008736
(71) Applicant: Cogne Acciai Speciali S.p.A., 11100 Aosta (IT)
(72) Inventor: BEGO, Flavio, Aosta (IT); LANZA, Lorenzo, Aosta (IT); MUCCI, Roberto, Aosta (IT); SORACE, Rocco, Aosta (IT); SPIGAROLO, Stefano, Aosta (IT)
(74) Representative: Bruni, Giovanni

(57) **Abstract**

*A method for reducing scale in a three-phase electric furnace for steelmaking, comprising the following steps:*
*a) chemically analyzing the starting scale,*
*b) drying the scale at a temperature of 120°C for at least 4 hours,*
*c) designing a melting mixture,*
*d) preparing the charge,*
*e) inserting the charge,*
*f) performing a first melting and tapping, where the first melting and tapping step (f) includes:*
*- a first melting phase (f1) in which the arc is kept short with a voltage between 500-600V and currents between 50-55kA to create a liquid head,*
*- a subsequent second melting phase (f2) that begins when the electrode height reaches a value between 500 and 1500 mm,*

*g) performing a second melting and tapping,*
*h) repeating a further melting and tapping phase.*

## Description

### Technical field of the invention

The present invention relates to a method of managing the scale produced during steel production, a waste that has the potential to be transformed into a useful by-product in the production cycle.

### Background art

As is well known, the most widely used electric arc furnaces for steelmaking are the electric arc furnaces. Electric arc furnaces consist of a vertically cylindrical crucible, made of a sheet metal shell internally lined with refractory material. The crucible is covered by a roof, which in modern furnaces is movable, allowing the crucible to be completely uncovered and the furnace to be quickly loaded from above using an overhead crane and charging baskets. Electric arc furnaces (EAF) are typically three-phase furnaces; they are therefore equipped with three graphite electrodes, which penetrate the crucible through three circular openings in the roof. The arc strikes between the tip of each of the three electrodes and the metal charge; current passes through the metal charge, and the secondary circuit is closed by the charge. The electric arc is a high-density plasma generated by partial ionization of the air and metal vapors from the charge; heat is transmitted to the charge primarily by radiation. The electric arc is characterized by converting a large amount of energy into heat, confined within a limited volume, thus reaching high temperatures (on the order of 10,000°C).

Calculating a total oxidation loss of approximately 10 kilograms of matrix per ton of steel over the entire rolling cycle, 60% occurs in the furnace and the remainder in the train. The oxide scale must be removed from the surface mechanically, physically, or chemically because it damages both the final product and the equipment it comes into contact with.

In particular, the scale produced in a steelmaking plant has the same chemical composition as the steel from which it originates, but exhibits a high degree of oxidation. This oxidation makes it unusable (it becomes waste), since it does not contain the same amount of reduced metal as primary steel. The scale is composed primarily of metal oxides, which must be reduced to reuse the metal contained within.

The three-phase electric furnace (EAF) is primarily designed for melting scrap, scrap metal, and ferroalloys, so the chemical reduction of metal oxides in the scale requires a specific approach. Metal oxides must be reduced to metal using a reducing agent (e.g., carbon) and adequately controlled thermal and chemical conditions within the furnace.

Due to its composition and the impurities, it may contain, scale can be classified as waste, particularly when it is not used in subsequent production processes. The management of metal waste and metal scale is strictly regulated, and its disposal must comply with local and international environmental regulations to avoid soil and water contamination.

The treatment of scale as waste typically involves:
- separate collection of the various types of scale, which can vary in chemical composition;
- recycling or thermal treatment, where the material is reduced to a more manageable format;
- treatment in specialized landfills, if there is no possibility of industrial reuse.

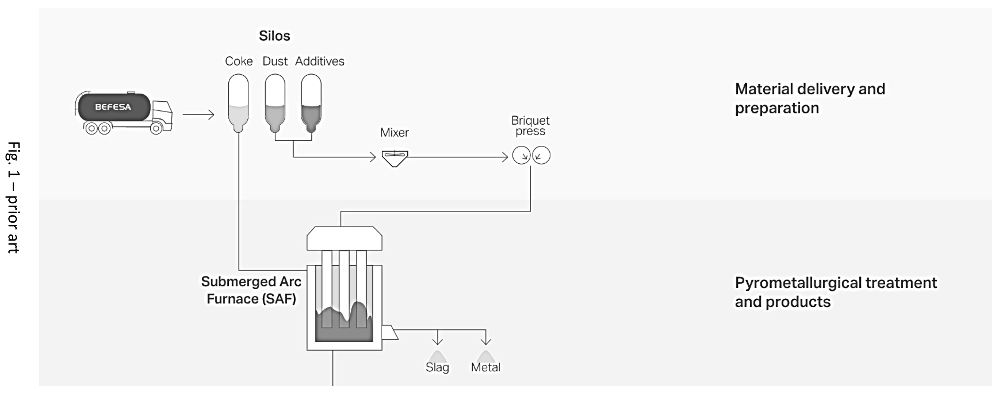

A well-known method for scale management is its treatment in submerged arc furnaces (SAFs), as shown in Figure 1. These furnaces are used for the production of ferroalloys and the treatment of oxides for reduction, and allow the treatment of metal scale that would otherwise be difficult to reuse.

A submerged arc furnace is a type of electrical system that uses an electric arc generated between electrodes and the metal charge (including scale) to melt the material. Specifically, the scale is introduced into the furnace and reduced through the melting process at high temperatures in a reducing environment.

The SAF, unlike a standard EAF, operates continuously or semicontinuously:
- the electrodes through which the electric current passes are immersed directly in the liquid bath, and heat is then supplied via an electric arc and resistive heating;
- the material is continuously loaded, and once the process is running at full capacity, both liquid metallic material and slag form inside the furnace, which is periodically discharged through a sampling hole.

SAFs are optimized for continuous or semi-continuous processes in the production of ferroalloys and non-ferrous metals.

Some specific advantages of this method are:
- metal recovery: the scale contains a significant amount of metal that can be separated and reused in the production cycle;
- precise temperature control: SAF furnaces allow for constant temperatures, optimizing metal reduction and improving energy efficiency;
- flexibility in material processing: this type of furnace is designed to process a wide range of metal scales, including those with a high percentage of oxides.

The purpose of the patent is to pursue these advantages even in a standard three-phase electric furnace (EAF) for steelmaking.

There is therefore a need to chemically reduce the scale obtained in steelmaking processes to obtain metal in a reduced form, which can then be reintroduced into the steelmaking cycle directly in a standard three-phase electric furnace (EAF) without the need for a different process.

### Summary of the invention

The solution to the technical problems referred to in the previous paragraph is achieved, according to the present invention, with a method for reducing the metal oxides (such as chromium and nickel oxides) contained in the scale to a metal alloy that can be reused in a conventional three-phase electric furnace (EAF).

Treating the scale in a three-phase electric furnace (EAF) according to the method of the present invention represents an advantageous solution for the reuse of this material, reducing production costs and improving the efficiency of the steel production cycle. This is achieved through the management of thermal and chemical conditions and the use of appropriate reducing agents. The described method includes steps starting from the oxide/scale as a raw material, the preparation of the material for melting, and the management of the chemical/electrical parameters necessary to achieve good yield.

Advantageously, once the scale has been reduced, the resulting titrated metal can be returned to the production cycle, perhaps as a raw material for steel production or as an additional alloy. This reduces the use of virgin raw materials and reduces overall production costs, as well as improving the sustainability of the process.

Advantageously, this method saves raw materials: the ability to reuse the reduced scale helps reduce the need for virgin minerals, which must be mined and processed.

Advantageously, this method reduces waste: transforming the scale into a useful by-product reduces solid waste and improves the sustainability of the steelmaking site.

According to one aspect of the present invention, a method is described for reducing scale from forging, rolling mills, and continuous casting in a three-phase electric furnace, having the characteristics set forth in independent method claim 1 appended to this specification.

Further preferred and/or particularly advantageous embodiments of the aforementioned method are described according to the characteristics set forth in the appended dependent claims.

### Brief description of the drawings

The invention will now be described with reference to the accompanying drawings, which illustrate some non-limiting examples of implementation, in which:
- Figure 1 shows the diagram of a known submerged arc furnace process,
- Figure 2 is a block diagram of the method according to the invention.

### Detailed description

An EAF furnace operates in batches; the feed is introduced through baskets, then melted, refined, and tapped in a single operation.

In an EAF, reducing agents such as carbon (which can be added in powdered or coke form) can be introduced to promote the reduction of oxides. The oxygen present in the oxides is removed by the carbon, which provides the carbon needed for the reduction reaction.

The furnace temperature must be controlled to ensure it is high enough to promote reduction, but not so high as to damage the furnace structure or compromise the quality of the metal produced.

During scale reduction, it is important to maintain a reducing environment within the furnace. This can be achieved by controlling the composition of the gas produced, particularly carbon monoxide.

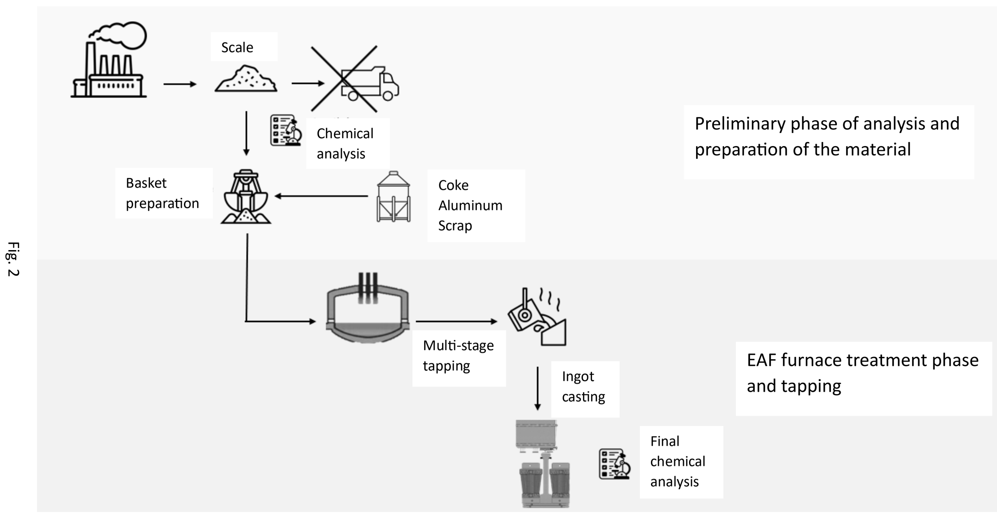

According to a first aspect of the present invention, as shown in Figure 2, the method for scale reduction in a three-phase electric furnace (EAF) for steel production comprises the preliminary steps of:
a) chemical analysis of the starting oxide/scale: depending on the generation process, the oxidation states may vary and are characteristic of the starting material from which the scale is generated, which influences the theoretical yield and the quantity of material required for reduction in the EAF;
b) drying of the material (scale): the material requires, after screening, a drying treatment in a furnace at a temperature of 120°C for at least 4 hours. This facilitates the elimination of residual moisture present in the material, which could cause reactions during the melting phase in the EAF furnace;
c) preparation of the melting mixture: depending on the quantity of oxygen (analyzed in phase a), the quantity of C is calculated between 10% and 15% of the total charge and of Al between 1% and 4% of the total charge and must be mixed with scale (preferably in a percentage between 40% and 65%) and purchased scrap (generally stainless-steel scrap), preferably in a percentage between 20% and 35%. The scrap is necessary for the melting initiation phase and obtaining the liquid pool, C and Al to reduce the scale and reach the target temperatures. The preparation of the melting mixture is crucial to achieving scale reduction in a normal EAF furnace;
d) charge preparation: the baskets are prepared according to a defined pattern to meet stringent density requirements and ensure the presence of conductive material in the upper part of the furnace to facilitate the ignition of the electric arc.

The subsequent phases inside the EAF furnace include:
e) insertion of the charge in a single step;
f) first melting, which in turn includes:
   f1) a first phase in which the arc is kept short, i.e., with a low voltage between 500-600V and currents between 50-55kA, to avoid radiation in the upper part of the furnace (the vault) since the electrodes are high and to create a liquid head that facilitates the melting of the material below;
   f2) a second melting phase that begins when the electrodes reach a height of between 500 and 1500 mm. At this height, the liquid pool is sufficient to gradually increase the arc length, promoting irradiation and melting of the material around the electrodes, i.e., at a voltage >600V and a current between 40-45kA. The arc and power balance is optimized according to the circular diagram for the specific EAF system and must ensure constant energy delivery to the system. At electrode heights less than 500 mm (electricity consumption in the order of 800 kWh/ton), the liquid inside the furnace can begin to be poured (tapping) into a previously heated casting ladle positioned below the pouring channel. During this phase, the furnace will operate tilted (at an angle between 1° and 6°) and in the presence of an electric arc.

Advantageously, the chemical package is initially set to maximum, meaning the burners are set to their maximum power to prevent fine material buildup and aid melting (phase f1). The flame is then lowered but kept active to prevent plugging of the burner seat and heat the surrounding material (phase f2);
g) second melting, following the logic outlined in point f2), thus working with long arcs. In this phase, additional reducing material is added based on the initial chemical analysis of the scale (FeSi, between 0.5% and 2% of the charge weight). Further tapping is performed as in phase f2);
h) any melting and tapping phases are repeated with characteristics as per point g), if solid material remains in the furnace.

Advantageously, the theoretical electricity consumption at the end of the process is between 1200 and 1400 kWh/ton.

Optimal management of the electrical parameters (and consequently the electric arc) and the furnace burner flow rates, as detailed in steps g, f, and h, allows for the production of a reduced metal alloy from sclaes using a standard three-phase EAF furnace.

The liquid contained within the casting ladle (in which argon mixing was activated from the first melting step f) must be characterized:
- chemically, by taking a sample and analyzing it in real time in the laboratory
- physically, by sampling the temperature with a dedicated measuring instrument.

The temperature is eventually corrected for casting into previously positioned ingots using a source casting process.

Since non-liquid material may remain inside the furnace, subsequent analytically compatible castings must be planned to recover any residue from the initial charge.

Therefore, the method described advantageously allows for the transformation of waste into a chemically characterized material, which can be reused in the production cycle.

While at least one exemplary embodiment has been presented in the summary and detailed descriptions, it should be understood that there are a large number of variations that fall within the scope of the invention. Furthermore, it should be understood that the embodiment(s) presented are merely examples that are not intended to limit in any way the scope of the invention or its application or configurations. Rather, the summary and detailed descriptions provide the person skilled in the art with a convenient guide for implementing at least one exemplary embodiment, it being clear that numerous variations can be made in the function and assembly of the elements described therein, without departing from the scope of the invention as set forth in the appended claims.

## Claims

1. A method for reducing scale in a three-phase electric furnace for steelmaking, comprising the following steps:
a) chemically analyzing the starting scale,
b) drying the scale at a temperature of 120°C for at least 4 hours,
c) designing a melting mixture comprising a quantity of carbon (C) between 10% and 15% of the total charge and aluminum (Al) between 1% and 4% of the total charge, mixed with scale in a percentage between 40% and 65% and with scrap in a percentage between 20% and 35%,
d) preparing the charge,
e) inserting the charge,
f) performing an initial melting and tapping, where the initial melting and tapping phase (f) includes:
- a first melting phase (f1) in which the arc is kept short with a voltage between 500-600V and currents between 50-55kA to create a liquid head,
- a subsequent second melting phase (f2) that begins when the electrode height reaches a value between 500 and 1500 mm, in which the arc is extended to a voltage >600V and a current between 40-45kA to promote radiation and melting of the surrounding material, and
in which tapping is performed during said second phase (f2) with the furnace tilted at an angle between 1° and 6°,
g) perform a second melting and tapping,
h) repeat a further melting and tapping phase.

2. Method according to claim 1, wherein step g) is configured to add additional reducing material based on the initial chemical analysis of the scale (step a).

3. Method according to any preceding claim, wherein step d) of preparing the charge comprises preparing baskets according to a defined pattern to meet stringent density requirements and ensure the presence of conductive material in the upper area of the furnace to facilitate the ignition of the electric arc.

4. Method according to any preceding claim, wherein step e) of inserting the charge is performed in a single step.

5. Method according to any preceding claim, wherein during the initial melting phase (f), the furnace burners are set to maximum power to aid melting in the first phase (f1), and their flame is subsequently lowered but kept active during the second phase (f2) to heat the material.

6. Method according to one of the preceding claims, wherein the liquid poured into the casting ladle is mixed by argon and subsequently characterized chemically and physically.
